(19) Europäisches Patentamt / European Patent Office / Office européen des brevets

(11) **EP 2 341 407 B1**

(12) **FASCICULE DE BREVET EUROPEEN**

(45) Date de publication et mention
de la délivrance du brevet:
**11.06.2014 Bulletin 2014/24**

(51) Int Cl.:
***G05B 19/10*** *(2006.01)*

(21) Numéro de dépôt: **10196428.6**

(22) Date de dépôt: **22.12.2010**

(54) **Dispositif de commande d'un appareil électroménager à touches sensitives**

Vorrichtung zur Steuerung eines Haushaltsgeräts mit berührungsempfindlichen Tasten

Device for controlling a household appliance with sensitive buttons

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.12.2009 FR 0959689**

(43) Date de publication de la demande:
**06.07.2011 Bulletin 2011/27**

(73) Titulaire: **FagorBrandt SAS
92500 Rueil Malmaison (FR)**

(72) Inventeurs:
• **Oudart, Pascal
45240, LA FERTE SAINT AUBIN (FR)**
• **Vautrin, Cédric
45800, SAINT JEAN DE BRAYE (FR)**

(74) Mandataire: **Stankoff, Hélène
SANTARELLI
14 avenue de la Grande Armée
75017 Paris (FR)**

(56) Documents cités:
**WO-A1-2008/022867       GB-A- 2 176 306
GB-A- 2 235 310          US-A1- 2006 231 375**

**Description**

La présente invention concerne un dispositif de commande d'un appareil électroménager à touches sensitives.

De manière générale, elle concerne un appareil électroménager ayant un bandeau de commande se présentant sous la forme d'une surface en matériau diélectrique, sans boutons de commande apparents.

De manière classique, un tel bandeau de commande comprend des touches sensitives placées derrière la surface en matériau diélectrique, aptes à détecter la présence d'un élément conducteur et notamment le doigt d'un utilisateur, posé sur la face apparente de la surface en matériau diélectrique.

Les touches sensitives sont par exemple des touches capacitives dont l'impédance varie lorsque le doigt de l'utilisateur est placé en vis-à-vis de ces touches capacitives.

La variation de l'impédance des touches sensitives est détectée par des moyens de détection de la présence d'un élément conducteur en regard des touches sensitives, ces moyens de détection adressant alors des signaux de détection à des moyens de traitement du dispositif de commande.

Les moyens de traitement sont adaptés, à partir des signaux de détection, à commander le réglage d'un ou plusieurs paramètres de fonctionnement de l'appareil électroménager.

Ces paramètres peuvent être notamment un paramètre de puissance associé à un élément chauffant de l'appareil électroménager, ou encore un paramètre de durée associé à une minuterie.

Il peut également s'agir d'un paramètre de température associé à une sonde de température disposée dans l'appareil électroménager.

Ces paramètres de fonctionnement ont la particularité de pouvoir prendre de nombreuses valeurs dans une gamme prédéfinie de réglage de ces paramètres.

Le réglage des valeurs de ces paramètres peut classiquement être réalisé au moyen d'une touche sensitive permettant l'incrémentation, ou la décrémentation, de la valeur du paramètre selon un pas de variation prédéfini.

Ce type de variation pas à pas de la valeur d'un paramètre est cependant fastidieux pour l'opérateur, dès lors qu'il nécessite de ce dernier des appuis successifs sur une touche sensitive, pour obtenir la valeur de réglage souhaitée voir le document US-A1-2006/0231375.

Cet inconvénient est d'autant plus critique que la gamme de valeurs prises par le paramètre de fonctionnement est très étendue.

On connaît également dans le document US 4 264 903 un dispositif de commande à touches capacitives ayant plusieurs électrodes disposées sur un cercle, permettant de suivre la position du doigt d'un utilisateur glissant successivement en vis-à-vis des électrodes adjacentes.

Le déplacement du doigt sur les électrodes commande une variation progressive des valeurs du paramètre.

Toutefois, un tel dispositif de commande est relativement encombrant dès lors qu'il doit présenter un parcours pour le glissement du doigt suffisant pour permettre le réglage des nombreuses valeurs pouvant être prises par un paramètre.

La présente invention a pour but de simplifier un dispositif de commande permettant le réglage d'au moins un paramètre de fonctionnement de l'appareil électroménager.

A cet effet, la présente invention concerne un dispositif de commande d'un appareil électroménager comprenant deux touches sensitives, des moyens de détection de la présence d'un élément conducteur en regard des touches sensitives et des moyens de traitement des signaux de détection fournis par les moyens de détection, adaptés à commander le réglage d'au moins un paramètre de fonctionnement de l'appareil électroménager.

Selon l'invention, les moyens de traitement sont adaptés à commander une variation continue des valeurs dudit au moins un paramètre de fonctionnement selon un pas de variation lorsque des signaux de détection successifs sont identifiés respectivement sur lesdites deux touches sensitives.

Ainsi, grâce à l'utilisation de deux touches sensitives, et à la détection de signaux successifs sur ces deux touches sensitives, le dispositif de commande selon l'invention permet de commander une variation continue des valeurs d'au moins un paramètre de fonctionnement.

On peut ainsi obtenir une variation progressive dans le temps des valeurs d'un paramètre de fonctionnement à l'aide uniquement de deux touches touchées successivement par l'utilisateur, et reproduire ainsi des fonctions de réglage obtenues dans l'état de la technique à l'aide de dispositif de commande sensitif nécessitant plusieurs touches sensitives disposées de manière adjacente selon des profils particuliers.

Le dispositif de commande selon l'invention permet de limiter l'encombrement des touches sensitives placées sur l'appareil électroménager, tout en diminuant le coût associé aux touches sensitives réduites ici à deux.

De préférence, les moyens de traitement sont adaptés à identifier des signaux de détection successifs lorsque les signaux de détection associés respectivement aux deux touches sensitives sont détectés dans un intervalle de temps prédéterminé.

Lorsque chaque touche sensitive peut être associée à des fonctions indépendantes de commande, il est possible de détecter une commande particulière, correspondant à une variation continue des valeurs d'au moins un paramètre de fonctionnement, en discriminant une action du doigt de l'utilisateur sur des touches sensitives de manière successive, par glissement du doigt sur les deux touches sensitives, d'une action de l'utilisateur sur l'une ou l'autre touche sensitive.

Selon une caractéristique avantageuse de l'invention, la variation continue des valeurs du paramètre est mise en oeuvre selon un pas de variation variable dans le temps.

Avantageusement, le pas de variation dépend d'une vitesse initiale de variation et d'une fonction de décélération prédéterminée.

Ainsi, la variation des valeurs du paramètre de fonctionnement est ralentie dans le temps, afin de faciliter le réglage de la valeur souhaitée du paramètre de fonctionnement.

La diminution dans le temps des pas de variation peut permettre également d'arrêter la variation continue des valeurs du paramètre sans requérir de l'utilisateur une action supplémentaire pour commander l'arrêt de cette variation.

Dans un mode de réalisation préféré, la vitesse initiale est fonction d'une durée séparant les signaux de détection successifs, de telle sorte que la vitesse du doigt de l'utilisateur effleurant les deux touches sensitives est prise en compte pour déterminer la vitesse initiale utilisée dans le calcul du pas de variation des valeurs du paramètre.

La présente invention concerne également, selon un second aspect, un appareil électroménager, notamment un appareil de cuisson domestique, comprenant un dispositif de commande décrit précédemment.

Cet appareil électroménager, qui peut être notamment une table de cuisson, une cuisinière, ou un four de cuisson, présente des avantages et caractéristiques analogues à ceux décrits précédemment en relation avec le dispositif de commande selon l'invention.

D'autres particularités et avantages de l'invention apparaîtront encore dans la description ci-après.

Aux dessins annexés, donnés à titre d'exemples non limitatifs :

- la figure 1 est une vue schématique de dessus d'une table de cuisson présentant un bandeau de commande selon un mode de réalisation de l'invention ;
- la figure 2 est une vue schématique de face d'un four de cuisson présentant un bandeau de commande selon un mode de réalisation de l'invention ;
- la figure 3 est un schéma bloc illustrant schématiquement un dispositif de commande selon un mode de réalisation de l'invention ;
- la figure 4 est un ensemble de courbes illustrant le fonctionnement des moyens de détection de la figure 3 ; et
- la figure 5 est un exemple d'un profil d'un pas de variation variable mis en oeuvre selon un mode de réalisation de l'invention.

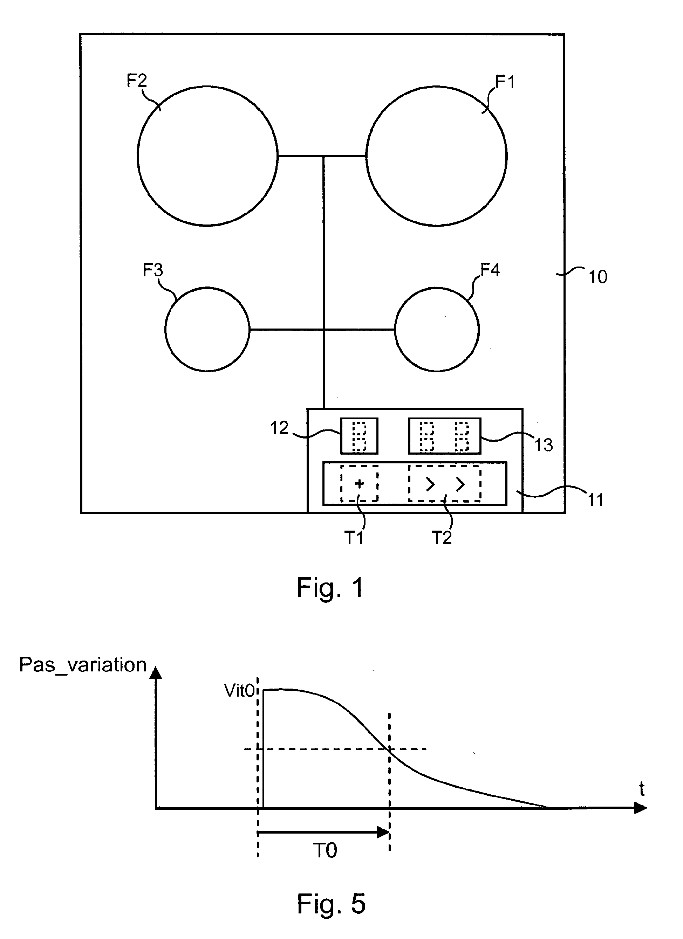

On va décrire tout d'abord en référence à la figure 1 un mode de réalisation selon l'invention d'un appareil électroménager.

Ici, de manière non limitative, l'appareil ménager est une table de cuisson 10 comprenant plusieurs foyers de cuisson F1, F2, F3, F4.

A titre d'exemple non limitatif, les foyers F1, F2, F3, F4 peuvent être des foyers de cuisson à induction. Bien entendu, le nombre de foyers et le type de moyens de chauffage peuvent être différents.

De même, l'invention n'est pas limitée à une table de cuisson mais s'applique à tout type d'appareil électroménager présentant un dispositif de commande pour le réglage des paramètres de fonctionnement, et notamment une cuisinière ou un four de cuisson.

Elle peut également s'appliquer à des appareils de lavage, du type lave-linge, sèche-linge ou lave vaisselle, ou encore à des appareils de réfrigération du type réfrigérateur ou congélateur.

Comme bien illustré à la figure 1, la table de cuisson 10 comprend un dispositif de commande 11, placé de préférence sous la forme d'un bandeau de commande à proximité d'un bord frontal de la table de cuisson 10.

Lorsque l'appareil électroménager est une table de cuisson 10, un plan de cuisson est réalisé au moyen d'une surface en matériau diélectrique, par exemple en verre, et typiquement par une plaque en vitrocéramique.

Le dispositif de commande est placé sous cette plaque de vitrocéramique.

Bien entendu, lorsque l'appareil électroménager présente une structure différente, seule la partie du bandeau de commande comportant le dispositif de commande décrit ci-après peut être réalisé à partir d'une plaque en matériau diélectrique, et par exemple en verre ou en plastique.

Le dispositif de commande 11 comprend en particulier deux touches sensitives T1, T2 placées sous la plaque en vitrocéramique. Ces touches sensitives T1, T2 peuvent être matérialisées par une sérigraphie sur la plaque en vitrocéramique.

Ces touches sensitives T1, T2 sont associées à des moyens de détection de la présence d'un élément conducteur en regard de ces touches sensitives T1, T2.

A titre d'exemple non limitatif, les touches sensitives T1, T2 peuvent être réalisées à partir de touches capacitives, les moyens de détection étant adaptés à détecter la variation de l'impédance lorsqu'un élément conducteur, et par exemple le doigt d'un utilisateur, est placé en regard de ces touches capacitives.

La réalisation de telles touches capacitives est bien connue de l'état de la technique, et n'a pas besoin d'être décrite en détails ici.

On pourra se reporter avantageusement à l'exemple de touches capacitives décrit dans le document EP 0 780 865.

Ces touches sensitives permettent ainsi de fournir des signaux de détection à partir desquels le réglage d'au moins un paramètre de fonctionnement de l'appareil électroménager peut être réalisé.

Dans une table de cuisson telle qu'illustrée à la figure 1, le paramètre de fonctionnement peut être notamment un paramètre de puissance associé à un élément chauffant d'un des foyers F1, F2, F3, F4 de la table de cuisson 10, ou encore un paramètre de durée d'une minuterie permettant de gérer la durée de fonctionnement d'un foyer de cuisson, ou encore un départ différé du fonctionnement d'un élément chauffant de l'appareil électroménager.

Bien entendu, dans d'autres types d'appareil électroménager, ce paramètre de fonctionnement peut être différent. Il peut en particulier être un paramètre de température, associé à une sonde de température de l'appareil électroménager, notamment lorsque celui-ci est un four de cuisson.

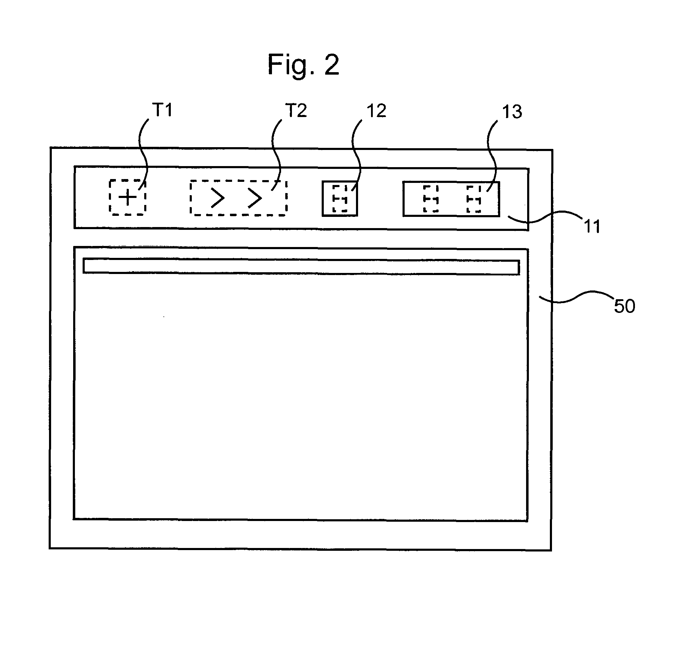

On a illustré ainsi à titre d'exemple à la figure 2 un four de cuisson 50 présentant un dispositif de commande 11 analogue à celui décrit précédemment pour une table de cuisson.

Le four de cuisson présentant une façade verticale, le dispositif de commande 11 est placé sur cette façade de l'appareil électroménager.

Afin de faciliter le réglage des paramètres de fonctionnement, le dispositif de commande 11 peut présenter des afficheurs 12, 13 permettant d'afficher la valeur réglée de chaque paramètre de fonctionnement.

En particulier, dans les exemples de réalisation décrits aux figures 1 et 2, le dispositif de commande 11 comprend un premier afficheur 12 sur un digit adapté par exemple à afficher un niveau de puissance de chauffage compris entre 1 et 9, et un second afficheur 13, comprenant deux digits permettant de régler entre 1 et 99 minute(s) une minuterie associée à la durée de fonctionnement d'un foyer de cuisson ou du four de cuisson, ou à un départ différé.

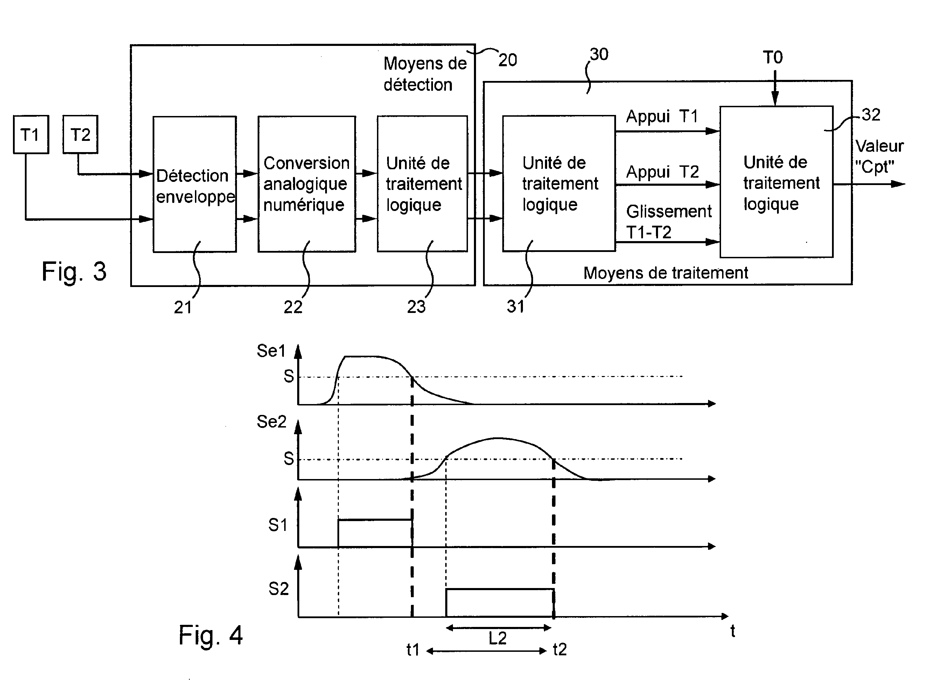

On va décrire à présent en référence à la figure 3, plus en détails, les moyens mis en oeuvre dans le dispositif de commande 11 décrit précédemment.

Ce dispositif de commande comprend en particulier des moyens de détection 20 adaptés à détecter la présence d'un élément conducteur en regard des touches sensitives T1, T2 et à adresser en sortie, à des moyens de traitement 30, des signaux de détection.

Les moyens de détection d'un signal en sortie d'une touche sensitive, du type touche capacitive, sont connus de l'état de la technique et un exemple de réalisation est décrit brièvement ci-après.

Ces moyens de détection 20 comportent notamment des moyens de détection d'enveloppe 21 du signal de courant mesuré en sortie des touches sensitives T1, T2, alimentées par un signal de courant haute fréquence. Les moyens de détection d'enveloppe 21 permettent ainsi de détecter le signal enveloppe Se1 et le signal enveloppe Se2 tel qu'illustré à la figure 4.

Des moyens de conversion analogique/numérique 22 sont en outre prévus pour convertir le signal analogique détecté en sortie des touches sensitives T1, T2.

Une unité de traitement logique 23 permet, par application d'un seuil de détection prédéterminé S, de générer un signal de détection S1 et un signal de détection S2 dont la largeur d'impulsion (exprimée en ms par exemple) correspond à la durée pendant laquelle le signal enveloppe Se1 et le signal enveloppe Se2 dépassent le seuil de détection prédéterminé S.

Les signaux de détection S1, S2 sont ainsi adressés en sortie de l'unité de traitement logique 23 aux moyens de traitement 30 du dispositif de commande 11.

Ces moyens de traitement 30 comportent notamment une première unité de traitement logique 31 adaptée à analyser les signaux de détection S1, S2 reçus.

Cette unité de traitement logique 31 permet ainsi notamment de discriminer les différents types d'appui pouvant être réalisés par l'utilisateur sur les deux touches sensitives T1, T2.

En particulier, lorsqu'un unique signal de détection est détecté sur l'une des deux touches sensitives T1, T2, un premier type de commande peut être généré par une seconde unité de traitement logique 32 pour commander la variation des valeurs d'un paramètre de fonctionnement.

Dans la suite de la description, on considère que le paramètre de fonctionnement est réglé au moyen d'un compteur pouvant prendre les différentes valeurs associées au paramètre de fonctionnement dans une plage de valeurs prédéterminées.

Par exemple, un compteur associé à une minuterie peut prendre toutes les valeurs entre 1 et 99.

La variation de la valeur de ce compteur est réalisée selon un pas de variation qui dépend notamment de la commande générée par la seconde unité de traitement logique 32.

En particulier, lorsque seule une des deux touches sensitives T1, T2 est actionnée par l'utilisateur, la première unité de traitement logique 31 est adaptée à adresser à la seconde unité de traitement logique 32 une information concernant un appui sur la première touche sensitive T1 ou un appui sur la seconde touche T2.

En réponse, la seconde unité de traitement logique 32 est adaptée à commander une variation unique de la valeur du paramètre de fonctionnement selon un pas de variation prédéterminée.

Par exemple, la première touche sensitive T1 peut être associée à une commande ayant un pas de variation d'une unité. Ainsi, lorsqu'un appui sur la première touche sensitive T1 est détecté, la valeur du paramètre de fonctionnement est incrémentée une seule fois, d'une unité.

En revanche, la seconde touche sensitive T2 peut être associée à un pas de variation prédéterminée supérieur à 1, et par exemple égal à 5 ou 10 unités.

Par conséquent, lorsqu'un appui est détecté sur la seconde touche sensitive T2, la valeur du paramètre de fonctionnement est incrémentée une seule fois de 5 ou 10 unités.

Bien entendu, lorsque l'utilisateur appui successivement sur l'une ou l'autre des deux touches sensitives T1, T2, la valeur du paramètre de fonctionnement est augmentée selon le pas de variation associé à chaque touche sensitive T1, T2, de manière discrète dans le temps jusqu'à atteindre la valeur choisie.

La première unité de traitement logique 31 des moyens de traitement 30 est également adaptée à identifier des signaux de détection S1, S2 successifs, correspondant respectivement à des signaux de détection associés aux deux touches sensitives T1, T2.

Les moyens de traitement 30 sont ainsi adaptés à identifier des signaux de détection S1, S2 successifs correspondant à un glissement du doigt de l'utilisateur sur les deux touches sensitives T1, T2, et ici par exemple de la première touche T1 vers la seconde touche T2.

En pratique, lorsque la première unité de traitement logique 31 des moyens de traitement 30 reçoit deux signaux de détection S1, S2 provenant respectivement des deux touches sensitives T1, T2, elle est adaptée à identifier des signaux de détection successifs lorsque ces signaux sont détectés dans un intervalle de temps prédéterminé, relativement court.

En relation à la figure 4, il est possible d'associer un instant de détection t1, t2 à chacun des signaux de détection S1, S2 émis par les touches sensitives T1, T2.

La durée séparant les deux instants t2 et t1 peut être comparée à un intervalle de temps prédéterminé, de préférence inférieur ou égal à 1 s, et, par exemple égal à 200 ms.

Bien entendu, cet intervalle de temps prédéterminé peut dépendre des caractéristiques du dispositif de commande.

En particulier, cet intervalle de temps prédéterminé dépend de la géométrie du panneau de commande, et par exemple de la distance séparant les deux touches sensitives T1, T2.

Il peut également dépendre de l'effet recherché, tel que perçu par l'utilisateur, permettant d'offrir un système de commande plus ou moins réactif.

La valeur de l'intervalle de temps prédéterminé pourrait être différente, et par exemple égale à une seconde.

De manière générale, cette valeur de l'intervalle de temps prédéterminé doit être fixée pour permettre de différencier un glissement du doigt sur les deux touches sensitives T1, T2 et deux appuis successifs sur ces deux touches sensitives T1, T2.

Lorsque la durée t2-t1 séparant les deux signaux de détection S1, S2 associés aux deux touches sensitives T1, T2 est inférieure à cet intervalle de temps prédéterminé, la première unité de traitement logique 30 en déduit un glissement du doigt de la touche sensitive T1 à la touche sensitive T2.

Cette information est alors utilisée par la seconde unité de traitement logique 32 pour adresser une commande particulière.

Dans ce cas, les moyens de traitement 30 sont adaptés à commander une variation continue dans le temps des valeurs du paramètre de fonctionnement selon un pas de variation.

Ainsi, la valeur du paramètre peut évoluer ou défiler en continu dans le temps pour permettre de parcourir plus rapidement l'ensemble des valeurs pouvant être prises par ce paramètre de fonctionnement.

De préférence, le pas de variation lors de cette variation continue des valeurs du paramètre est variable dans le temps, et de préférence, diminue dans le temps afin de faciliter le réglage du paramètre de fonctionnement à une valeur choisie.

Bien entendu, le pas de variation pourrait être constant lors de la variation continue des valeurs du paramètre, et par exemple égal à 5 unités.

Lorsque l'utilisateur veut arrêter la variation continue du paramètre dans sa plage de valeurs avant d'atteindre l'extrémité de la plage des valeurs pouvant être prises par le paramètre de fonctionnement, un nouvel appui détecté sur l'une des deux touches sensitives T1, T2 peut commander l'arrêt de cette variation continue.

Dans ce mode de réalisation, le pas de variation diminuant dans le temps, la variation continue des valeurs du paramètre peut être ralentie, voire s'arrêter automatiquement sans requérir une nouvelle action de l'utilisateur sur le dispositif de commande 11.

On a illustré à la figure 5 un exemple de profil suivi par un pas de variation variable dans le temps.

Ce pas de variation dépend notamment d'une vitesse initiale Vit0 et d'une fonction de décélération prédéterminée.

La vitesse initiale Vit0 peut être une vitesse préfixée dans le dispositif de commande 11, et par exemple correspondant à un pas de variation de 10 unités du compteur associé au paramètre de fonctionnement.

Dans un autre mode de réalisation, cette vitesse initiale Vit0 peut être déterminée en fonction de caractéristiques associées aux signaux de détection S1, S2 successifs, en fonction du type d'appui réalisé par l'utilisateur sur les deux touches sensitives T1, T2.

Par exemple, dans un premier mode de réalisation, la vitesse initiale Vit0 peut dépendre de la durée t2-t1 séparant les signaux de détection S1, S2 successifs.

La vitesse initiale Vit0 dépend ainsi de la vitesse de glissement du doigt de l'utilisateur sur les deux touches sensitives T1, T2.

Ainsi, la vitesse initiale est égale à :

$$Vit0 = k/(t2\text{-}t1)$$

k étant un coefficient permettant ainsi de lier la vitesse de glissement du doigt sur les deux touches sensitives T1, T2 et la vitesse de défilement du compteur, c'est-à-dire la valeur du pas de variation en début de commande de la variation continue de ce compteur.

A titre d'exemple, la fonction de décélération, mettant en oeuvre une constante de décélération T0, peut permettre de calculer le pas de variation variable selon la formule suivante :

$$Pas\_variation = Vit0 \times Exp(-t/T0).$$

En fonction de l'évolution dans le temps de la variable t, le pas de variation diminue selon le profil de décélération choisi.

La valeur du paramètre de fonctionnement évolue alors selon la formule suivante :

$$Cpt = Cpt + Pas\_variation.$$

La valeur Cpt du paramètre de fonctionnement évolue ainsi de manière continue dans le temps, selon un pas de variation diminuant dans le temps.

Bien entendu, la prise en compte de la durée t2-t1 séparant les signaux de détection S1, S2 pour déterminer la vitesse initiale Vit0 n'est pas limitative, la vitesse initiale Vit0 pouvant être déterminée en prenant en compte d'autres caractéristiques des signaux de détection S1, S2 successifs.

Par exemple, cette vitesse initiale Vit0 peut dépendre de la largeur d'impulsion L2 dans le temps du deuxième signal de détection S2 associé à la seconde touche sensitive T2.

Ainsi, lorsque la première unité de traitement logique 31 identifie un premier signal de détection S1 associé à la première touche sensitive T1 et un deuxième signal de détection S2 associé à la seconde touche T2, postérieur au premier signal de détection S1, la vitesse initiale Vit0 dépend de la largeur d'impulsion L2 dans le temps de ce deuxième signal de détection S2.

Une formule identique à celle décrite précédemment pour le profil de décélération peut être utilisée à partir de cette vitesse initiale Vit0, définie de la manière suivante :

$$Vit0 = k'/L2$$

où k' est un coefficient reliant la largeur d'impulsion L2 du second signal de détection S2 associé à la seconde touche sensitive T2 et la vitesse du compteur.

De préférence, la variation continue de la valeur des paramètres de fonctionnement correspond à une incrémentation continue des valeurs du paramètre de fonctionnement.

Le dispositif de commande 11 décrit précédemment peut également prévoir une décrémentation continue de la valeur du paramètre du fonctionnement à partir d'une valeur courante, lorsque par exemple la première unité de traitement logique 31 détecte un premier signal de détection associé à la seconde touche sensitive T2, puis un second signal de détection, postérieur au premier signal de détection, associé à la première touche sensitive T1.

Ainsi, en fonction du sens de glissement du doigt de l'utilisateur sur les deux touches sensitives T1, T2, le dispositif de commande 11 est adapté à commander une incrémentation continue ou une décrémentation continue des valeurs du paramètre de fonctionnement.

Bien entendu, l'incrémentation et la décrémentation des valeurs du compteur pourraient être commandées séparément, à partir de deux paires de touches sensitives T1, T2 indépendantes.

De même, le dispositif de commande 11 peut ne prévoir que l'incrémentation continue des valeurs du paramètre de fonctionnement.

Ce dispositif de commande 11 décrit précédemment permet ainsi, à l'aide uniquement de deux touches sensitives T1, T2, de réaliser au moins trois modes de réglage d'un paramètre de fonctionnement.

Les deux touches sensitives T1, T2 permettent de faire évoluer un paramètre de fonctionnement en continu, sans nécessiter un appui continu de l'utilisateur sur les touches sensitives T1, T2.

Ainsi, il n'est pas utile de laisser le doigt sur le bandeau de commande du dispositif de commande 11 pour obtenir une variation continue des valeurs du paramètre de fonctionnement.

Par ailleurs, l'utilisation de deux touches sensitives T1, T2 permet de limiter l'encombrement du dispositif de commande 11 tout en permettant l'évolution des valeurs du paramètre de fonctionnement en continu sur toute la plage de valeurs pouvant être prises par ce paramètre de fonctionnement.

Bien entendu, la présente invention n'est pas limitée aux exemples de réalisation décrits précédemment tout en restant dans le cadre défini par les revendications.

En particulier, le paramètre de fonctionnement peut également être un paramètre d'humidité associé à un générateur de vapeur, mis en oeuvre par exemple dans un four vapeur.

**Revendications**

1. Dispositif de commande d'un appareil électroménager (10, 50) comprenant deux touches sensitives (T1, T2), des moyens de détection (20) de la présence d'un élément conducteur en regard desdites touches sensitives (T1, T2) et des moyens de traitement (30) des signaux de détection (S1, S2) fournis par les moyens de détection (20), adaptés à commander le réglage d'au moins un paramètre de fonctionnement dudit appareil électroménager (10, 50), **caractérisé en ce que** les moyens de traitement (30) sont adaptés à commander une variation continue des valeurs dudit au moins un paramètre de fonctionnement selon un pas de variation lorsque des signaux de détection (S1, S2) successifs sont identifiés respectivement sur lesdites deux touches sensitives (T1, T2).

**2.** Dispositif de commande conforme à la revendication 1, **caractérisé en ce que** lesdits moyens de traitement (30) sont adaptés à identifier des signaux de détection (S1, S2) successifs lorsque lesdits signaux de détection (S1, S2) associés respectivement auxdites deux touches sensitives (T1, T2) sont détectés dans un intervalle de temps prédéterminé.

**3.** Dispositif de commande conforme à la revendication 2, **caractérisé en ce que** ledit intervalle de temps est inférieur ou égal à 1 s.

**4.** Dispositif de commande conforme à l'une des revendications 1 à 3, **caractérisé en ce que** la variation continue des valeurs du paramètre est mise en oeuvre selon un pas de variation variable dans le temps.

**5.** Dispositif de commande conforme à la revendication 4, **caractérisé en ce que** ledit pas de variation dépend d'une vitesse initiale de variation (Vit0) et d'une fonction de décélération prédéterminée.

**6.** Dispositif de commande conforme à la revendication 5, **caractérisé en ce que** ladite vitesse initiale (Vit0) est une vitesse préfixée dans ledit dispositif de commande (11).

**7.** Dispositif de commande conforme à la revendication 5, **caractérisé en ce que** ladite vitesse initiale (Vit0) est déterminée en fonction de caractéristiques desdits signaux de détection (S1, S2) successifs.

**8.** Dispositif de commande conforme à la revendication 7, **caractérisé en ce que** ladite vitesse initiale (Vit0) est fonction d'une durée (t2-t1) séparant lesdits signaux de détection (S1, S2) successifs.

**9.** Dispositif de commande conforme à la revendication 7, **caractérisé en ce que** les moyens de traitement (30) identifiant un premier signal de détection (S1) et un deuxième signal de détection (S2), postérieur audit premier signal de détection (S1), ladite vitesse initiale (Vit0) dépend de la largeur d'impulsion (L2) dans le temps dudit deuxième signal de détection (S2).

**10.** Dispositif de commande conforme à l'une des revendications 1 à 9, **caractérisé en ce que** lesdits moyens de traitement (30) sont adaptés à commander une incrémentation continue, respectivement une décrémentation continue, des valeurs dudit au moins un paramètre de fonctionnement, lorsque lesdits signaux de détection (S1, S2) successifs sont associés à une première touche sensitive (T1), puis une deuxième touche sensitive (T2), respectivement à ladite deuxième touche sensitive (T2), puis ladite première touche sensitive (T1).

**11.** Dispositif de commande conforme à l'une des revendications 1 à 10, **caractérisé en ce que** lesdits moyens de traitement (30) sont adaptés à commander une variation unique de la valeur dudit au moins un paramètre de fonctionnement, selon un pas de variation prédéterminé, lorsqu'un unique signal de détection (S1, S2) est détecté sur l'une desdites deux touches sensitives (T1, T2).

**12.** Dispositif de commande conforme à l'une des revendications 1 à 11, **caractérisé en ce que** ledit paramètre de fonctionnement est choisi parmi un paramètre de puissance associé à un élément chauffant dudit appareil électroménager (10, 50), un paramètre de durée, un paramètre de température associé à une sonde de température dudit appareil électroménager (50) ou un paramètre d'humidité associé à un générateur de vapeur.

**13.** Appareil électroménager, notamment appareil de cuisson domestique, **caractérisé en ce qu'**il comprend un dispositif de commande (11) conforme à l'une des revendications 1 à 12.

**14.** Appareil électroménager conforme à la revendication 13, notamment table de cuisson, cuisinière, ou four de cuisson.

**Patentansprüche**

**1.** Vorrichtung zur Steuerung eines Elektrohaushaltsgeräts (10, 50), mit zwei berührungsempfindlichen Tasten (T1, T2), Mitteln (20) zur Erfassung des Vorhandenseins eines leitfähigen Elements gegenüber den berührungsempfindlichen Tasten (T1, T2) und Mitteln (30) zur Verarbeitung der von den Erfassungsmitteln (20) gelieferten Erfassungssignale (S1, S2), die dazu geeignet sind, das Einstellen mindestens eines Betriebsparameters des Elektrohaushaltsgeräts (10, 50) zu steuern, **dadurch gekennzeichnet, dass** die Verarbeitungsmittel (30) dazu geeignet sind, eine kontinuierliche Änderung der Werte des mindestens einen Betriebsparameters gemäß einem Änderungsschritt zu steuern, wenn aufeinanderfolgende Erfassungssignale (S1, S2) jeweils an den beiden berührungsempfindlichen Tasten (T1, T2) festgestellt werden.

**2.** Steuervorrichtung nach Anspruch 1, **dadurch gekennzeichnet, dass** die Verarbeitungsmittel (30) dazu geeignet sind, aufeinanderfolgende Erfassungssignale (S1, S2) festzustellen, wenn die jeweils den beiden berührungsempfindlichen Tasten (T1, T2) zugeordneten Erfassungssignale (S1, S2) in einem vorbestimmten Zeitintervall erfasst werden.

3. Steuervorrichtung nach Anspruch 2, **dadurch gekennzeichnet, dass** das Zeitintervall kleiner oder gleich 1 s beträgt.

4. Steuervorrichtung nach einem der Ansprüche 1 bis 3, **dadurch gekennzeichnet, dass** die kontinuierliche Änderung der Werte des Parameters gemäß einem zeitlich variablen Änderungsschritt durchgeführt wird.

5. Steuervorrichtung nach Anspruch 4, **dadurch gekennzeichnet, dass** der Änderungsschritt von einer anfänglichen Änderungsgeschwindigkeit (Vit0) und einer vorbestimmten Verzögerungsfunktion abhängig ist.

6. Steuervorrichtung nach Anspruch 5, **dadurch gekennzeichnet, dass** die Anfangsgeschwindigkeit (Vit0) eine vorab in der Steuervorrichtung (11) festgelegte Geschwindigkeit ist.

7. Steuervorrichtung nach Anspruch 5, **dadurch gekennzeichnet, dass** die Anfangsgeschwindigkeit (Vit0) in Abhängigkeit von Merkmalen der aufeinanderfolgenden Erfassungssignale (S1, S2) bestimmt wird.

8. Steuervorrichtung nach Anspruch 7, **dadurch gekennzeichnet, dass** die Anfangsgeschwindigkeit (Vit0) von einer Dauer (t2-t1) abhängig ist, die die aufeinanderfolgenden Erfassungssignale (S1, S2) trennt.

9. Steuervorrichtung nach Anspruch 7, **dadurch gekennzeichnet, dass** die Verarbeitungsmittel (30) ein erstes Erfassungssignal (S1) und ein auf das erste Erfassungssignal (S1) folgendes zweites Erfassungssignal (S2) feststellen, wobei die Anfangsgeschwindigkeit (Vit0) von der zeitlichen Impulsbreite (L2) des zweiten Erfassungssignals (S2) abhängig ist.

10. Steuervorrichtung nach einem der Ansprüche 1 bis 9, **dadurch gekennzeichnet, dass** die Verarbeitungsmittel (30) dazu geeignet sind, eine kontinuierliche Inkrementierung bzw. eine kontinuierliche Dekrementierung der Werte des mindestens einen Betriebsparameters zu steuern, wenn die aufeinanderfolgenden Erfassungssignale (S1, S2) einer ersten berührungsempfindlichen Taste (T1) und anschließend einer zweiten berührungsempfindlichen Taste (T2) bzw. der zweiten berührungsempfindlichen Taste (T2) und anschließend der ersten berührungsempfindlichen Taste (T1) zugeordnet werden.

11. Steuervorrichtung nach einem der Ansprüche 1 bis 10 , **dadurch gekennzeichnet, dass** die Verarbeitungsmittel (30) dazu geeignet sind, eine einzige Änderung des Werts des mindestens einen Betriebsparameters gemäß einem vorbestimmten Änderungsschritt zu steuern, wenn ein einziges Erfassungssignal (S1, S2) an einer der beiden berührungsempfindlichen Tasten (T1, T2) erfasst wird.

12. Steuervorrichtung nach einem der Ansprüche 1 bis 11, **dadurch gekennzeichnet, dass** der Betriebsparameter aus einem einem Heizelement des Elektrohaushaltsgeräts (10, 50) zugeordneten Leistungsparameter, einem Parameter bezüglich der Dauer, einem einem Temperaturfühler des Elektrohaushaltsgeräts (50) zugeordneten Temperaturparameter oder einem einem Dampfgenerator zugeordneten Feuchtigkeitsparameter ausgewählt ist.

13. Elektrohaushaltsgerät, insbesondere Haushaltskochgerät, **dadurch gekennzeichnet, dass** es eine Steuervorrichtung (11) nach einem der Ansprüche 1 bis 12 aufweist.

14. Elektrohaushaltsgerät nach Anspruch 13, insbesondere Herdplatte, Küchenherd oder Backofen.

**Claims**

1. Control device for a household electrical appliance (10, 50) comprising two touch-sensitive surfaces (T1, T2), detection means (20) for detecting the presence of a conductive element opposite to the touch-sensitive surfaces (T1, T2) and treatment means (30) of the detection signals (S1, S2) supplied by the detection means (20), adapted to control the setting of at least one operation parameter of said electrical household appliance (10, 50), **characterized in that** the treatment means (30) are adapted to control a continuous change in the values of said at least one operation parameter according to a variation pitch, when successive detection signals (S1, S2) are identified respectively on said two touch sensitive surfaces (T1, T2).

2. Control device according to claim 1, **characterized in that** said treatment means (30) are adapted to identify successive detection signals (S1, S2) when said detection signals (S1, S2) associated respectively with said two touch-sensitive surfaces (T1, T2) are detected during a predetermined time interval.

3. Control device according to claim 2, **characterized in that** said time interval is lower than or equal to 1 s.

4. Control device according to one of the claims 1 to 3, **characterized in that** the continuous change of the parameter values is implemented according to a variation pitch variable in the time.

5. Control device according to claim 4, **characterized in that** said variation pitch depends on an initial variation speed (Vit0) and on a predetermined deceleration function.

6. Control device according to claim 5, **characterized in that** the initial speed (Vit0) is a preprogrammed speed into said control device (11).

7. Control device according to claim 5, **characterized in that** the initial speed (Vit0) is determined by the characteristics of said successive detection signals (S1, S2).

8. Control device according to claim 7, **characterized in that** the initial speed (Vit0) depends on a time period (t2-t1) separating the successive detection signals (S1, S2).

9. Control device according to claim 7, **characterized in that**, the treatment means (30) identifying a first detection signal (S1) and a second detection signal (S2), after said first signal (S1), the initial speed (Vit0) depends on the width of the pulse (L2) in the time of said second detection signal (S2).

10. Control device according to one of claims 1 to 9, **characterized in that** said treatment means (30) are adapted to control a continuous increment, or respectively a continuous decrement, of the values of said at least one operation parameter, when the successive detection signals (S1, S2) are associated with a first touch-sensitive surface (T1), then a second touch-sensitive surface (T2), or respectively, with said second touch-sensitive surface (T2), then said first touch-sensitive surface (T1).

11. Control device according to one of the claims 1 to 10, **characterized in that** the treatment means (30) are adapted to control a single variation of the value of said at least one operation parameter, according to a predetermined variation pitch, when a single detection signal (S1, S2) is detected on one of said touch-sensitive surfaces (T1, T2).

12. Control device according to one of the claims 1 to 11, **characterized in that** said operation parameter is chosen amongst a power parameter associated with a heating element of said household electrical appliance (10, 50), a duration parameter, a temperature parameter associated with a temperature sensor of said household electrical appliance (50) or a humidity parameter associated with a steam generator.

13. Household electrical appliance, in particular a domestic cooking appliance, **characterized in that** it comprises a control device (11) according to one of the claims 1 to 12.

14. Household electrical appliance according to claim 13, in particular a hob, a cooker or an oven.

Fig. 1

Fig. 5

## Fig. 2

Fig. 3

Fig. 4

EP 2 341 407 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060231375 A1
- US 4264903 A

- EP 0780865 A